Europäisches Patentamt

European Patent Office

Office européen des brevets

(11) Publication number: **0 195 505**
**B1**

# EUROPEAN PATENT SPECIFICATION

(45) Date of publication of patent specification: **16.01.91**

(51) Int. Cl.⁵: **C 08 J 5/18, C 08 L 23/12**

(21) Application number: **86300822.3**

(22) Date of filing: **06.02.86**

(54) **Polypropylene resin composition and biaxially stretched film thereof.**

(30) Priority: **06.02.85 JP 21043/85**

(43) Date of publication of application:
**24.09.86 Bulletin 86/39**

(45) Publication of the grant of the patent:
**16.01.91 Bulletin 91/03**

(84) Designated Contracting States:
**DE FR GB IT**

(56) References cited:
**EP-A-0 012 605**
**DE-A-1 905 206**
**FR-A-2 374 358**

**PATENT ABSTRACTS OF JAPAN, vol. 7, no. 250
(M-254) 1395r, 08 Nov 1983 & JP-A-58 134 712**

(73) Proprietor: **MITSUBISHI KASEI CORPORATION
5-2, Marunouchi 2-chome Chiyoda-ku
Tokyo 100 (JP)**

(72) Inventor: **Matsumoto, Yoshio
1-31-41, Hiroe 3-chome
Kurashiki-shi Okayama-ken (JP)**
Inventor: **Fujii, Toshio
1-32-23, Hiroe 3-chome
Kurashiki-shi Okayama-ken (JP)**
Inventor: **Shinohara, Yoshinao
1-200-1216, Hiroe 3-chome
Kurashiki-shi Okayama-ken (JP)**
Inventor: **Fukuda, Kiyoshi
1200-5 Fukue
Kurashiki-shi Okayama-ken (JP)**

(74) Representative: **Lawrence, Peter Robin
Broughton et al
GILL JENNINGS & EVERY 53-64 Chancery Lane
London WC2A 1HN (GB)**

# EP 0 195 505 B1

**Description**

The present invention relates to a polypropylene resin composition having good mechanical properties, particularly rigidity and stretchability, and to a biaxially stretched film comprising the polypropylene resin composition.

Biaxially stretched polypropylene film can have good optical properties (such as transparency and luster), heat-resistance, chemical-resistance and electrical properties and some of its mechanical properties, such as tensile strength and rigidity, can be good. As a result it is widely used for packaging and in electric components such as capacitors and electric cable. However, if certain of its properties could be improved it would become suitable for other uses.

In particular, biaxially stretched polypropylene film is inferior to cellophane and polyester film in rigidity (so-called nerve). As a result, it is difficult to apply it to automatic packaging, especially overlap-packaging and twist-packaging, and it is liable to become crumpled when it is processed into capacitor film.

The rigidity of polypropylene is greatly affected by the draw ratio and the structure thereof. The term "polypropylene" means propylene homopolymers and random copolymers of propylene with a small amount of ethylene. Since the propylene homopolymer has better rigidity than the random copolymer, the stretched propylene homopolymer is generally used when rigidity is required.

To improve further the original rigidity of the propylene homopolymer, a method of using propylene homopolymer of higher than 98.0% of isotactic index (hereinafter referred to as I.I.) has been proposed (refer to Japanese patent application laid-open (KOKAI) No. 57—103819). Unfortunately the method results in reduced stretchability and accordingly it is more difficult to stretch the thus obtained propylene homopolymer at a high draw ratio. As a result, it is impossible to obtain by this method stretched polypropylene films having excellent rigidity.

A method for improving the stretchability of propylene homopolymer has been proposed in Japanese patent application laid-open (KOKAI) No. 56—32512). This involves using a random copolymer. For instance, a copolymer of propylene and ethylene is prepared by polymerising propylene in the presence of a catalyst comprising titanium trichloride and an organic aluminium compound, (prepared by reducing titanium tetrachloride by an organic aluminium compound and further activating the thus reduced substance), while adding a small amount of ethylene, the content of ethylene units in the copolymer being 0.1 to 1.0% by weight.

However, although this method gives a random copolymer of improved stretchability the I.I. of the copolymer is highly reduced by the copolymerisation with an extremely small amount of ethylene. Accordingly the stretched polypropylene film is limp.

In EP 0012605, molded polypropylene products in which the isotactic pentad fraction of the boiling heptane insoluble portion is at least 0.955 and the content of boiling-heptane-soluble portion is 2.0 to 9.0% by weight, are proposed. It is stated that the products have improved properties of stiffness, oil resistance and heat resistance.

It would be desirable to be able to produce polypropylene having an improved combination of both rigidity and stretchability.

A polypropylene resin composition according to the invention comprises 100 parts by weight of propylene homopolymer having a stereoregularity of a boiling heptane-insoluble part thereof of not less than 0.960 as an isotactic pentad rate obtained by $^{13}$C-NMR (nuclear magnetic resonance spectroscopy) and 0.01 to 2 parts by weight of a hydrocarbon polymer having a completely or partially saturated main hydrocarbon chain and at least one hydroxy group at an end of the main hydrocarbon chain (referred to below as the "hydrocarbon polymer").

The invention includes the manufacture of a biaxially stretched film by melt moulding this composition to form a film, and biaxially stretching the thus obtained film at a temperature of 150 to 200°C by the T-die method or the inflation method. The invention also includes films, especially biaxially stretched films, made from the composition.

Polypropylene used in the present invention is propylene homopolymer and the stereoregularity of the boiling heptane-insoluble part thereof is not less than 0.960, as the isotactic pentad rate obtained by $^{13}$C-NMR, preferably is not less than 0.970, and most preferably not less than 0.975. Such a propylene homopolymer can be produced by the methods disclosed in Japanese patent applications laid-open (KOKAI) Nos. 59—13630 and 56—59285.

If the isotactic pentad rate is below 0.960 the improvement in the rigidity of the stretched film is small.

The isotactic pentad rate of the boiling heptane insoluble part of the propylene homopolymer is obtained as follows.

After completely dissolving 5 g of the specimen of propylene homopolymer in 500 ml of boiling xylene and leaving the thus formed solution to cool to 20°C, the resultant mixture is subjected to filtration, thereby separating the mixture into the xylene-soluble part and the xylene-insoluble part respectively at 20°C. The xylene-soluble part at 20°C is then subjected to soxhlet-extraction for 6 hours with boiling heptane, thereby causing separation into an extract and into the residue which is named the boiling heptane-insoluble part.

The isotactic pentad rate is measured by the method disclosed in "Macromolecules", Vol. 8, page 687 (1975), and is the isotactic rate of the pentad units in the molecular chain of propylene homopolymer determined by using $^{13}$C-NMR spectrum. In particular, the isotactic pentad rate is measured as the fraction

2

of area of the peak "m m m m" in all the absorption peaks in the region of methyl-carbon appearing in the $^{13}$C-NMR spectrum of the specimen of propylene homopolymer.

The melt-flow index (hereinafter referred to as MFi) of propylene homopolymer used according to the present invention may be typical of polypropylenes used in the manufacture of stretched films. However, MFi of propylene homopolymer used in the present invention is generally in the range of 0.2 to 10 measured at 230°C under a load of 2160 g according to the method of Japanese Industrial Standards (JIS) K-7210, preferably in the range of 0.5 to 7, more preferably in the range of 0.5 to 6.

The hydrocarbon polymer may be a liquid polymer, semisolid polymer or solid polymer (at ordinary temperature) of a molecular weight of 500 to 200,000. The average number of the hydroxy groups per molecule of the hydrocarbon polymer is preferably from 1.5 to 8.0.

The main hydrocarbon chain of the hydrocarbon polymer used in the present invention has been completely or partially saturated and provided with at least one hydroxy group at the end thereof. When the main hydrocarbon chain takes the form of hydrogenated 1,4-polybutadiene, the hydrogenation degree is at least 20%, preferably not less than 50% and more preferably not less than 80%.

The hydrocarbon polymer is generally obtained by subjecting to hydrogenation a diene polymer and/ or a diene-copolymer which may have been produced from the raw material, such as one or more dienes, by a well known method, for instance, a radical polymerisation method or an anionic polymerisation method.

The anionic polymerisation method, may according to the conditions, produce 1,2-polybutadiene which has the saturated hydrocarbon main chain and has the necessary amount of vinyl groups, for instance, not less than 50%, particularly not less than 70% on the alternative carbon atoms of the polydiene skeleton. Accordingly, it may not be necessary to subject the 1,2-polybutadiene to hydrogenation.

The dienes polymer having at least one hydroxy group at the chain end thereof is easily obtained by subjecting a monomeric diene to radical polymerisation while using hydrogen peroxide as the initiator of polymerisation.

In the anionic polymerisation method, for instance, monoepoxy compound, formaldehyde, acetaldehyde, acetone, halogenoalkylene oxide or polyepoxide is reacted with a living polymer which is produced by subjecting a conjugated diene singly or together with a vinyl monomer to polymerisation in the presence of a catalyst for anionic polymeriation, for instance an alkali metal or an organic alkali metal compound and which has a structure that alkali metal is bonded to at least one of the chain ends.

As the raw monomeric material, of the polymer, at least one kind of conjugated diene monomer is used, and as the conjugated diene monomer, butadiene-1,3; isoprene; chloroprene; pentadiene-1,3; 2,3-dimethyl-butadiene-1,3; and 1-phenylbutadiene-1,3 may be exemplified.

Copolymerisable monomer for incorporation into the conjugated dienes copolymer may be one or more vinyl monomers. The vinyl monomer may be a vinyl aromatic compounds such as styrene, α-methylstyrene or vinyltoluene; a derivative of (meth) acrylic acid such as methyl acrylate, butyl acrylate, or methyl methacrylate; a nitrile compound such as acrylonitrile, or methacrylonitrile; a vinylpyridine such as 2-vinylpyridine or 4-vinylpyridine; a vinyl ether such as methyl vinyl ether or 2-chloroethyl vinyl ether; a halogenated vinyl compound such as vinyl chloride or vinyl bromide; or a vinyl esters such as vinyl acetate. In addition, a vinyl monomer having active hydrogen such as 2-hydroxyethyl methacrylate, acrylic acid and acrylamide may be used.

The amount of the vinyl monomer, if present, is preferably not more than 50% by weight of the total amount of the monomers in the case where the physical properties of the final product is taken into consideration.

Each of the dienes polymers and/or copolymers is used after performing any necessary complete or partial hydrogenation of unsaturated (double) bonds of the main chain of the polymer and/or copolymer. However, in the case of 1,2-polybutadiene or 3,4-polyisoprene which does not contain any unsaturated bond in the main chain of the polymer, hydrogenation is not effected.

The hydrogenation may be effected completely or partially. Concerning 1,4-butadiene, the hydrogenation degree should be at least 20%, as otherwise the adhesive strength of the final product is insufficient and there will either be no adhesion or there will be unevenness in the adhering surface. The hydrogenation degree preferably is at least 30%.

Since the percentage of carbon atoms participating in the unsaturation (formation of double bonds) in the main chain of 1,4-polybutadiene can be 50% of the total carbon atoms of 1,4-polybutadiene, in the present invention the percentage of such carbon atoms should be reduced to not more than 40%.

On the other hand when 50% of the linkages are 1,2 linkages, the percentage of carbon atoms participating the unsaturation in the main chain is only 33% and so such a 1,2-polybutadiene can be used as the hydrocarbon polymer without being subjected to hydrogenation.

Hydrogenation of the polymer, when necessary, can be by conventional contact-hydrogenation. As catalyst can be used conventionally nickel catalyst (for instance, Raney nickel), cobalt catalyst, platinum catalyst, palladium catalyst, ruthenium catalyst, rhodium catalyst, mixed catalysts thereof or a metal alloy catalyst may be used. Such a catalyst may be used singly or may be used as a soluble uniform complex, as a solid, or supported on a carrier such as carbon, silica or diatomaceous earth. Hydrogenation may also be carried out in the presence of a metal complex obtained by reducing a compound containing nickel, titanium or cobalt with an organic metal compound such as trialkylaluminium or alkyllithium. Ordinary molecular hydrogen may be used for the hydrogenation or any hydrogen-containing gas may be used provided it does not contain a catalyst poison or another component that will interfere with the reduction. Hydrogen for use in hydrogenation may be supplied by blowing under ordinary pressure or under a pressure and hydrogenation may be carried out at a temperature between room temperature and 200°C, preferably below 180°C.

The diene polymer and/or copolymer may be supplied to the hydrogenation system alone or as a solution in a solvent, for instance an aliphatic hydrocarbon, cycloaliphatic hydrocarbon, aromatic hydrocarbon, alcohol or aliphatic carboxylic acid or mixture thereof.

Another method for producing the saturated hydrocarbon polymer comprises subjecting a copolymer of $\alpha$-olefin and a copolymerisable monomer other than $\alpha$-olefin to oxidation and decomposition, and reducing the thus formed substance. For instance, a copolymer of butyl rubbers obtained by subjecting isobutylene and butadiene or 1,3-pentadiene to cationic polymerisation may be subjected to ozonolysis and the resultant substance may be reduced by lithium aluminium hydride to obtain polyhydroxypoly-isobutylene.

In another method of polyhydroxypolyolefin may be obtained by subjecting to ozonolysis a poly-$\alpha$-olefin having unsaturated bonds and obtained by homopolymerising ethylene or copolymerising ethylene with a diene in the presence of propylene, and then reducing the resultant substance.

The amount of the hydrocarbon polymer that is blended into the polypropylene resin composition is ordinarily 0.01 to 2 parts by weight, preferably 0.1 to 2 parts by weight and more preferably 0.3 to 1.2 parts by weight to 100 parts by weight of the propylene homopolymer. If the amount is below 0.01 part there is inadequate improvement in stretchability. If the amount is above 2 parts there is little or no further improvement in stretchability and the solvent-resistance of the product may be reduced.

The polypropylene resin composition according to the present invention may be obtained by dry-blending the propylene homopolymer and the hydrocarbon polymer in a blender and melt-mixing the thus blended material, generally at a temperature of 190 to 300°C while using for instance a Banbury mixer, continuous mixer, mixing rolls or extruder and pelletising the thus melt-mixed material to obtain the resin composition in pellets.

Known additives used in conventional polypropylene compositions, such as heat stabiliser, antioxidant, ultraviolet ray-absorbent, antiblocking agent, lubricant and other additives, may be included in the composition.

Unstretched films or sheets may be prepared by using the thus produced polyethylene resin composition and then biaxially stretched under appropriate conditions to form biaxially stretched film.

The preparation of the unstretched film or sheet may be carried out in conventional manner for instance by an inflation-moulding method while using a circular die or by a T-die moulding method while using a T-die, preferably with a resin composition temperature of 190 to 300°C and a draft rate of 1 to 50.

When the unstretched film is prepared by inflation-moulding, it is preferably to mould at a resin temperature of 200 to 270°C, a draft rate of 1 to 50, a blow-up ratio of 1.5 to 4.0 and a cooling rate index (T) of not more than 7.

The draft rate is represented as follows:

$$\text{Draft rate} = \frac{\rho_m}{\rho_f} \cdot \frac{G}{t} \cdot \frac{1}{BUR} \qquad (I)$$

wherein

G is the width of the die slit,
t is the thickness of the thus obtained film,
$\rho_m$ is the density of the resin composition extruded from the die slit,
$\rho_f$ is the density of the thus produced film and BUR is the blow-up ratio.

In the case where the non-stretched film is prepared by T-die-moulding, the draft rate is expressed by substituting BUR to 1 (BUR = 1) in the above-mentioned formula (I).

If the draft rate is below 1, the optical properties of the thus produced film may be poor. If the draft rate is over 50, the film is apt to be split longitudinally.

The cooling rate index (T) is the retention time during which the molten resin composition extruded from the die arrives at the frost line (in the case of inflation-moulding) or the air gap (in the case of T-die-moulding expressed by sec, and represented by the following formula:

$$T = \frac{A_1}{V_1 - V_0} \ln \left( \frac{V_1}{V_2} \right) \qquad (II)$$

wherein

T is the cooling rate index (sec),
$A_1$ is the height of the frost line (cm) or of the air gap (cm),
$V_1$ is the winding-up rate of the film (cm/sec) and
$V_0$ is the linear rate of the molten resin composition at the outlet of the die.

The cooling rate index (T) should be no more than 7, and may be controlled to be the predetermined level by changing the factors in the formula (II) in combination. For instance, to change the height of the frost line or of the air gap while maintaining the cooling rate index (T) constant, the cooling ratio of the cooling apparatus (such as air-cooling) or the distance from the T-die to the cooling rolls may be changed. To change $V_0$ or $V_1$ while maintaining the cooling rate index (T) constant the extrusion rate of the wind-up rate of the winding machine may be changed. Thus the index of cooling rate index (T) is set up by the combination of the factors in the formula (II).

If cooling rate index (T) is over 7, the bubble may become unstable due to insufficient cooling and the strength of the film may be reduced by the relaxation of the molecular orientation in the film.

Where the non-stretched film is prepared by T-die moulding, it is preferable to mould at a resin temperature of 190 to 300°C, a draft rate of 1 to 10, a cooling rate index of not more than 7 and a cooling roll temperature of from 40 to 120°C.

The resultant unstretched film is then biaxially stretched. It is successively or simultaneously stretched as initially formed or after slitting the unstretched film to a predetermined width. When performing successive biaxial stretching, the unstretched film is at first stretched in the longitudinal direction (in the take-up direction of the film) and then further stretched in the transverse direction (perpendicular to the take-up direction) or vice versa. When carrying out the simultaneous biaxial stretching, the allotment of the time for longitudinal stretching and the time for transversal stretching is optionally varied, for instance, (1) the film is slowly and continuously stretched longitudinally until the transversal stretching is finished, (2) stretching is begun simultaneously both in the longitudinal direction and in the transversal direction or (3) the longitudinal stretching is finished at first.

In the invention it is possible to use either successive biaxial stretching by a tenter method or a tubular method of the simultaneous biaxial stretching, but the tenter method is preferred because of the resultant high transparency of the film.

The biaxial stretching invention is carried out under the following conditions of (1) the stretching temperature, (2) the stretching rate and (3) the stretch ratio.

The stretching temperature is preferably in the range of 150 to 200°C, preferably 155 to 175°C. If the stretching temperature is below 150°C, the film is apt to be cut during stretching because of the insufficient mobility of the molecular chain of the polymer, and in the case where even the film can be stretched, the stretch ratio cannot be raised sufficiently and accordingly it is impossible to obtain any stretched film excellent in physical properties. If the stretching temperature is over 200°C, it is difficult to effect the orientation of the molecules of the polymer by stretching because the resin composition may be beginning to melt and stretching may be uneven and the transparency of the product may be poor.

The stretching rate may be in the range of 2 to 50%/sec, preferably in the range of 10 to 30%/sec. If it is 2%/sec, the stretchability of the film is apt to be reduced due to the orientation-crystallisation of the polymers during stretching. If it is over 50%/sec, the modification of the shape of the polymer cannot follow the stretching rate resulting in breaking of the film by stretching.

The stretch ratio is preferably in the range of 2 to 10 times in the longitudinal direction of the film, preferably 4 to 10 times, and in the range of 2 to 10 times in the transversal direction of the film, preferably 4 to 10 times, from the viewpoint of the operability of the film in stretching and the physical properties of the thus biaxially stretched film. If the stretch ratio in the longitudinal direction is below 2 times, the stretched film may be of uneven thickness. If the stretch ratio is over 10 times, the process is difficult to operate to obtain a satisfactory film.

As a result of the present invention, by blending a saturated hydrocarbon polymer having at least one hydroxy group at the main chain end thereof with a specified polypropylene, it is possible to obtain a polypropylene resin composition of a remarkably improved stretchability while retaining therein the high rigidity of propylene homopolymer.

Accordingly, since a biaxially stretched film comprising the polypropylene resin composition obtained according to the present invention has a high rigidity, the film can be suitably used for packaging and for preparing electrical devices such as capacitor or electric cable.

The present invention will be explained more in detail while referring to the following non-limitative examples.

For reference, the methods for determination of the important properties of the polymer and the film of the present invention are set forth below.

(1) Method for determining the isotactic pentad fraction:

After heating 5 g of a specimen of polypropylene in 500 ml of p-xylene under a reflux condenser for 5 min and leaving the mixture to cool, the thus precipitated material is treated with n-heptane for 6 hours under a reflux condenser. The thus obtained insoluble material was subjected to $^{13}$C-NMR spectroscopy. The method of $^{13}$C-NMR spectroscopy and the method for analysis of the thus obtained spectrum are described in Macromolecules, *8*, 687 (1975).

(2) Method for evaluating the stretchability of a film:

For the evaluation of the stretchability of the non-stretched film, the mechanical stress in the time of longitudinal stretching and that in the time of transversal stretching are recorded as the indices for evaluating the stretchability of the non-stretched film in the biaxial stretching. The smaller is the mechanical stress, the more excellent is the stretchability.

(3) Method for determination of the rigidity of the biaxially stretched film:

The initial elastic modulus is measured using a specimen of the biaxially stretched film of 25 mm in width and 140 mm in length by a tensile tester under a crosshead-velocity of 10 mm/min, as the index representing the rigidity of the specimen.

## Examples 1 to 5

(1) Production of a polymer of saturated hydrocarbon series having a hydroxy group at the end of the main chain thereof

Into an autoclave of 10 litres in capacity, 3 kg of polyhydroxypolybutadiene (made by Arco Chem. Co., Ltd., R-45 HT, hydroxyl group of 0.82 meg/g, and 15% by weight of cis-1,4 polymer, 58% by weight of trans-1,4 polymer and 27% by weight of vinyl), 3 kg of cyclohexane and 300 g of a catalyst (5% by weight of ruthenium carried by carbon, made by Nippon Engerhardt Co., Ltd.) were introduced, and after substituting the gas phase in the autoclave by purified argon, a supply of highly purified gaseous hydrogen to the autoclave was begun and heating was started. After about 30 min, the conditions within the autoclave reached 100°C and $1.47 \times 10^7$ Pa (150 kg/cm$^2$) pressure. After leaving the autoclave for 15 hours under the above-mentioned conditions, hydrogenation was stopped, and the thus hydrogenated polymer was purified and dried by the ordinary procedures.

The thus obtained polymer was found to be a hydrocarbon polymer practically free of double bonds, by IR absorption spectroscopy, and containing 0.81 meq/g of hydroxyl group. Molecular weight of the polymer measured by vapour-pressure method was 3000.

(2) Preparation of the polypropylene resin composition and of the biaxially stretched film

To 100 parts by weight of a propylene homopolymer (melt-flow rate index 2.5 g/10 min and isotactic pentad rate of 0.980) an amount (shown in Table 1) of the polymer of saturated hydrocarbons having a hydroxy group at the end of main chain obtained as above (1) was added, and the mixture was subjected to dry-blending.

The thus obtained blended mixture was melt-kneaded by a monoaxial extruder of a cylinder diameter of 40 mm at 190°C to pelletise the mixture. The resultant polypropylene resin composition according to the present invention melted at 162°C.

The composition was extruded into a shape of a sheet of 2 mm of thickness by a T-die type moulding machine at a resin temperature of 260°C, a cooling rolls temperature of 90°C, a wind-up rate of 0.5 m/min and a draft rate of 1.5.

The thus obtained sheet was at first stretched in longitudinal direction at 160°C by 5 times and then stretched in transversal direction at 165°C by 9 times while using a batch-type successive biaxially stretching machine to obtain a biaxially stretched film of about 45 µm in thickness. The stretchability and the rigidity of the specimen during the above-mentioned operations were measured according to the methods shown above. The results are shown in Table 1.

## Comparative Example 1

A biaxially stretched film was produced in the same manner as in Example 1 except for not adding the saturated hydrocarbon polymer having a hydroxy group at the main chain end to the propylene homopolymer. The results are also shown in Table 1.

## Comparative Example 2

A biaxially stretched film was produced in the same manner as in Example 1 except for adding 3 parts by weight of the saturated hydrocarbon polymer having a hydroxy group at the end of main chain to the propylene homopolymer instead of adding 0.1 part by weight of the same in Example 1. The results are also shown in Table 1.

## Comparative Examples 3 and 4

A biaxially stretched film was produced in the same manner as in Example 1 except for (i) using a propylene homopolymer of an MFi of 2.0 g/10 min and an isotactic pentad rate of 0.96 (Comparative Example 3) or a propylene homopolymer of an MFi of 2.0 g/10 min and an isotactic pentad rate of 0.955 (Comparative Example 4) instead of the propylene homopolymer produced in Example 1 and (ii) not adding the saturated hydrocarbon polymer having a hydroxy group at the end of main chain.

The results are also shown in Table 1.

TABLE 1

| Example or Comparative Example No. | Physical properties of PP[1] | | Amount of hydrocarbon polymer[2] (parts by weight) | Stress in elongation (Pa) [(kg/cm²)] | | Elastic modulus in stretching (longitudinal/ transversal) (kg/cm²) |
|---|---|---|---|---|---|---|
| | MFi (g/10 min) | Isotactic pentad rate | | longi- tudinal | trans- versal | |
| Example 1 | 2.5 | 0.980 | 0.1 | $1.42 \times 10^6$ [14.5] | $1.14 \times 10^6$ [11.6] | 195/493 |
| 2 | 2.5 | 0.980 | 0.2 | $1.39 \times 10^6$ [14.2] | $1.08 \times 10^6$ [11.0] | 196/495 |
| 3 | 2.5 | 0.980 | 1 | $1.33 \times 10^6$ [13.6] | $0.97 \times 10^6$ [9.9] | 198/493 |
| 4 | 2.5 | 0.980 | 2 | $1.18 \times 10^6$ [12.0] | $0.83 \times 10^6$ [8.5] | 188/500 |
| 5 | 2.5 | 0.980 | 0.05 | $1.47 \times 10^6$ [15.0] | $1.17 \times 10^6$ [11.9] | 196/498 |
| Comparative Example 1 | 2.5 | 0.980 | 0 | $1.56 \times 10^6$ [15.9] | $1.21 \times 10^6$ [12.3] | 197/502 |
| 2 | 2.5 | 0.980 | 3 | $1.18 \times 10^6$ [12.0] | $0.78 \times 10^6$ [8.0] | 189/489 |
| 3 | 2.0 | 0.967 | 0 | $1.42 \times 10^6$ [14.5] | $1.11 \times 10^6$ [11.3] | 169/490 |
| 4 | 2.0 | 0.955 | 0 | $1.29 \times 10^6$ [13.2] | $1.01 \times 10^6$ [10.4] | 143/440 |

Notes: [1] PP means propylene homopolymer.
[2] Hydrocarbon polymer means the saturated hydrocarbon polymer having a hydroxy group at the main chain end thereof.

As is clearly seen in Table 1, although the propylene homopolymer of high stereoregularity requires a high stress in stretching, the addition of the hydrocarbon polymer reduces the stress in stretching while retaining the rigidity of the propylene homopolymer.

In order to produce a biaxially stretched film using an apparatus on an industrial scale, polypropylene resin compound showing a longitudinal stress in stretching of not more than $0.15 \times 10^6$ Pa (1.5 kg/cm²) and a transversal stress in stretching of not more than $0.12 \times 10^6$ Pa (1.2 kg/cm²) is preferred and this can be achieved in the present invention. When the biaxial stretching is carried out using conditions substantially different from the above-mentioned conditions, there may be increased risk of troubles such as tearing of the film during stretching and the unzipping of the chack of the tenter.

Examples 6 to 9

To 100 parts by weight of the same propylene homopolymer used in Example 1, an amount (shown in Table 2) of the hydrocarbon polymer obtained in (1) of Example 1 was added, and after subjecting the mixture to dry-blending, the thus dry-blended mixture was melt-kneaded by a monoaxial extruder of a cylinder diameter of 40 mm at 190°C to pelletise the mixture, i.e., the polypropylene resin composition according to the present invention melting at 162°C.

The composition was extruded into a shape of a sheet of 2 mm in thickness by a T-die type moulding machine at a resin temperature of 260°C, a cooling rolls temperature of 90°C, a wind-up rate of 0.5 m/min and a draft rate of 1.5.

The thus obtained sheet was at first stretched by rolls at 160°C by 7 times in longitudinal direction and then stretched by a tenter at 165°C by 7 times in transversal direction while using a tenter method apparatus for successive biaxial stretching to obtain a biaxially stretched film of about 40 μm in thickness. During the stretching, the rigidity of the film in stretching was measured by the aforementioned method and the stability of the film in stretching was evaluated according to the following standards, the stretching rate during the above-mentioned successive biaxial stretching being 100% sec.

Evaluation standards of the stability in stretching

The extent of occurrence of the unzipping of the chack of the tenter is adopted as the evaluation index of the stability as follows.

| Index | Situation in Stretching |
|---|---|
| A | there were no problems. |
| B | without occurring any unzipping, however, uniform stretching could not effected by the large stress. |
| C | unzipping occurred frequently to make the continuous operation impossible. |

Example 10

In the same manner as in Example 9 except for using propylene homopolymer of an isotactic pentad rate of 0.975 instead of the propylene homopolymer of an isotactic pentad rate of 0.980 in Example 9, a biaxially stretched film was prepared. The results are shown in Table 2.

Comparative Example 5

In the same manner as in Example 6 except for not adding the saturated hydrocarbon polymer having a hydroxy group at the main chain end, a biaxially stretched film was prepared. The results are shown in Table 2.

Comparative Example 6

In the same manner as in Example 6 except for adding 3 parts by weight of the saturated hydrocarbon polymer having a hydroxy group at the main chain end instead of adding 0.1 parts by weight of the hydrocarbon polymer in Example 6, a biaxially stretched film was prepared. The results are shown in Table 2.

Comparative Example 7

In the same manner as in Example 6 except for (i) using a propylene homopolymer of MFi of 2.0 g/10 min and of the isotactic pentad rate of 0.955 instead of that of the isotactic pentad rate of 0.980 in Example 9 and (ii) not adding the saturated hydrocarbon polymer having a hydroxy group at the main chain end thereof, a biaxially stretched film was prepared. The results are shown also in Table 2.

Comparative Example 8

In the same manner as in Example 6 except for (i) using a propylene homopolymer of MFi of 2.0 g/10 min and an isotactic pentad rate of 0.955 instead of the propylene homopolymer used in Example 6 and (ii) adding 2 parts by weight of the hydrocarbon polymer used in Example 6 instead of 0.1 parts by weight thereof, a biaxially stretched film was prepared. The results are shown also in Table 2.

TABLE 2

| Example Comparative Example No. | Physical properties of homopolymer of propylene | | Amount of hydrocarbon polymer[1] (parts by weight) | Elastic modulus in stretching (longitudinal/transversal (kg/cm$^2$) | Stability in stretching |
|---|---|---|---|---|---|
| | MFi (g/10 min) | Isotactic pentad fraction | | | |
| Example 6 | 2.5 | 0.980 | 0.1 | 212/537 | A |
| 7 | 2.5 | 0.980 | 0.2 | 213/539 | A |
| 8 | 2.5 | 0.980 | 1 | 216/536 | A |
| 9 | 2.5 | 0.980 | 2 | 205/544 | A |
| 10 | 2.5 | 0.975 | 2 | 200/520 | A |
| Comparative Example 5 | 2.5 | 0.980 | 0 | 215/547 | C |
| 6 | 2.5 | 0.980 | 3 | 206/528 | B |
| 7 | 2.0 | 0.955 | 0 | 156/440 | A |
| 8 | 2.0 | 0.955 | 2 | 156/440 | A |

Note: [1] Hydrocarbon polymer means the saturated hydrocarbon polymer having a hydroxy group at the main chain end thereof.

8

**Claims**

1. A polypropylene resin composition comprising a propylene homopolymer characterised in that the homopolymer has a stereoregularity of a boiling heptane-insoluble part thereof of not less than 0.960 as an isotactic pentad rate obtained by $^{13}$C-NMR and the composition contains, per 100 parts by weight of the homopolymer, 0.01 to 2 parts by weight of a hydrocarbon polymer having a completely or partially saturated main hydrocarbon chain and at least one hydroxy group at an end of the main hydrocarbon chain, the hydrocarbon polymer being obtained from a diene polymer or copolymer which has at least one hydroxy group at an end of the main chain thereof.

2. A polypropylene resin composition according to claim 1, wherein the propylene homopolymer shows a stereoregularity of a boiling heptane-insoluble part thereof of not less than 0.970 as an isotactic pentad rate obtained by $^{13}$C-NMR.

3. A polypropylene resin composition according to claim 1 or claim 2 in which the amount of the hydrocarbon polymer is 0.1 to 2 parts by weight, preferably 0.3 to 1.2 part by weight.

4. A polypropylene resin composition according to any preceding claim, wherein the hydrocarbon polymer having at least one hydroxy group at the main chain end thereof has a molecular weight of from 500 to 200,000 and has an average number of the hydroxy groups of 1.5 to 8.0 per one molecule of the hydrocarbon polymer.

5. A polypropylene resin composition according to claim 4, wherein the diene polymer or copolymer has been produced by radical polymerisation or anion polymerisation.

6. A polypropylene resin composition according to any preceding claim, wherein the diene polymer or copolymer has been produced by polymerisation of a conjugated diene monomer, preferably butadiene-1,3; isoprene; chloroprene; pentadiene-1,3; 2,3-dimethyl-butadiene-1,3 or 1-phenyl-butadiene-1,3.

7. A polypropylene resin composition according to any preceding claim, wherein the diene copolymer is a copolymer of a conjugated diene monomer and at least one kind of vinyl monomers in an amount of, preferably not more than 50% by weight of total monomers and wherein conjugated diene monomer is preferably butadiene-1,3; isoprene; chloroprene; pentadiene-1,3; 2,3-dimethyl-butadiene-1,3 or 1-phenyl-butadiene-1,3, and the vinyl monomer is preferably an aromatic vinyl compound such as α-methylstyrene and vinyltoluene; a derivative of (meth) acrylic acid such as methyl acrylate, butyl acrylate and methyl methacrylate; a nitrile compound such as acrylonitrile and methacrylonitrile; a vinyl pyridine such as 2-vinylpyridine and 4-vinylpyridine; a vinyl ether and 2-chloroethyl vinyl ether; a halogenated vinyl such as vinyl chloride and vinyl bromide; a vinyl ester such as vinyl acetate; or a vinyl monomer having active hydrogen such as 2-hydroxyethyl methacrylate, acrylic acid and acrylamide.

8. A polypropylene resin composition according to any preceding claim, wherein the hydrocarbon polymer has been produced by the steps of subjecting a copolymer of an α-olefin, preferably isobutylene, and a monomer other than said α-olefin, preferably butadiene or 1,3-pentadiene, to oxidation and decomposition and reducing the thus obtained substance.

9. A biaxially stretched film produced by melt-moulding a polypropylene resin composition according to any preceding claim to form a film and biaxially stretching the thus formed film at a temperature of 150 to 200°C.

10. A biaxially stretched film according to claim 10, wherein the stretch ratio in the biaxial stretching is 2 to 10 times in the longitudinal and transversal directions.

**Patentansprüche**

1. Eine ein Propylenhomopolymer enthaltende Polypropylenharzmasse, dadurch gekennzeichnet, daß das Homopolymer eine sterische Regelmäßigkeit eines in siedendem Heptan unlöslichen Teils davon von nicht weniger als 0.960 als durch $^{13}$C-NMR-Analyse ermittelte isotaktische Menge an isotaktischen Fünfereinheiten aufweist und die Masse pro 100 Gew.-Teile des Homopolymeren 0,01 bis 2 Gew.-Teile eines Kohlenwasserstoffpolymeren mit einer vollständig oder teilweise gesättigten Kohlenwasserstoff-Hauptkette und mindestens einer Hydroxylgruppe an einem Ende der Kohlenwasserstoff-Hauptkette enthält, wobei das Kohlenwasserstoffpolymer aus einem Dienpolymer oder Copolymer, das mindestens eine Hydroxylgruppe an einem Ende seiner Hauptkette aufweist, hergestellt ist.

2. Polypropylenharzmasse nach Anspruch 1, worin das Propylenhomopolymer eine sterische Regelmäßigkeit eines in siedendem Heptan unlöslichen Teils davon von nicht weniger als 0,970 als durch $^{13}$C-NMR-Analyse ermittelte Menge an isotaktischen Fünfereinheiten aufweist.

3. Polypropylenharzmasse nach Anspruch 1 oder 2, worin die Menge des Kohlenwasserstoffpolymeren 0,1 bis 2 Gew.-Teile, vorzugsweise 0,3 bis 1,2 Gew.-Teile, beträgt.

4. Polypropylenharzmasse nach einem der vorangegangenen Ansprüche, worin das Kohlenwasserstoffpolymer mit mindestens einer Hydroxylgruppe am Ende seiner Hauptkette ein Molekulargewicht von 500 bis 200.000 und eine durchschnittliche Anzahl an Hydroxylgruppen von 1,5 bis 8,0 pro Molekül des Kohlenwasserstoffpolymeren aufweist.

5. Polypropylenharzmasse nach Anspruch 4, worin das Dienpolymer oder Copolymer durch radikalische Polymerisation oder anionische Polymerisation hergestellt ist.

6. Polypropylenharzmasse nach einem der vorangegangenen Ansprüche, worin das Dienpolymer oder Copolymer durch Polymerisation eines konjugierten Dienmonomeren, vorzugsweise 1,3-Butadien; Isopren; Chloropren; 1,3-Pentadien; 2,3-Dimethyl-1,3-butadien oder 1-Phenyl-1,3-butadien hergestellt ist.

7. Polypropylenharzmasse nach einem der vorangegangenen Ansprüche, worin das Diencopolymer ein Copolymer aus einem konjugierten Dienmonomeren und mindestens einer Vinylmonomerenart in einer Menge von vorzugsweise nicht mehr als 50 Gew.-% der Gesamtmonomere ist und das konjugierte Dienmonomer vorzugsweise 1,3-Butadien; Isopren; Chloropren; 1,3-Pentadien; 2,3-Dimethyl-1,3-butadien oder 1-Phenyl-1,3-butadien ist und das Vinylmonomer vorzugsweise eine aromatische Vinylverbindung, wie α-Methylstyrol und Vinyltoluol; ein (Meth)acrylsäure-derivat, wie Methylacrylat, Butylacrylat und Methylmethacrylat; eine Nitrilverbindung, wie Acrylnitril und Methacrylnitril; ein Vinylpyridin, wie 2-Vinylpyridin und 4-Vinylpyridin; ein Vinylether, wie Methylvinylether und 2-Chlorethylvinylether; eine halogenierte Vinylverbindung, wie Vinylchlor und Vinylbromid; ein Vinylester, wie Vinylacetat oder ein Vinylmonomer mit aktivem Wasserstoff, wie 2-Hydroxyethylmethacrylat, Acrylsäure und Acrylamid ist.

8. Polypropylenharzmasse nach einem der vorangegangenen Ansprüche, worin das Kohlenwasserstoffpolymer durch Oxidation eines Copolymeren aus einem α-Olefin, vorzugsweise Isobutylen, und einem von diesem α-Olefin verschiedenen Monomeren, vorzugsweise Butadien oder 1,3-Pentadien, und Zersetzung und Reduktion der in dieser Weise erhaltenen Substanz hergestellt ist.

9. Biaxial-gestreckt Folie, die durch Schmelzformen einer Polypropylenharzmasse nach einem der vorangegangenen Ansprüche unter Bildung einer Folie und biaxiales Strecken der in dieser Weise gebildeten Folie bei einer Temperatur von 150 bis 200°C hergestellt ist.

9. Biaxial-gestreckt Folie nach Anspruch 9, worin das Streckverhältnis beim biaxialen Strecken das 2- bis 10-fache in Längs- und Querrichtung beträgt.

**Revendications**

1. Composition de résine de polypropylène comprenant un homopolymère de propylène, caractérisée en ce qu'une partie insoluble dans l'heptane bouillant de l'homopolymère a une stéréorégularité non inférieure à 0,960, comme exprimé par le taux isotactique de pentades déterminé par RMN de $^{13}$C, et la composition contient, pour 100 parties en poids de l'homopolymère, 0,01 à 2 parties en poids d'un polymère hydrocarboné ayant une chaîne hydrocarbonée principale totalement ou partiellement saturée et comportant au moins un groupe hydroxyle à une extrémité de la chaîne hydrocarbonée principale, le polymère hydrocarboné étant obtenu à partir d'un polymère ou copolymère de diène, qui comporte au moins un groupe hydroxyle à une extrémité de sa chaîne principale.

2. Composition de résine de polypropylène selon la revendication 1, dans laquelle une partie insoluble dans l'heptane bouillant de l'homopolymère de propylène a une stéréorégularité non inférieure à 0,970, comme exprimé par le taux isotactique de pentades déterminé par RMN de $^{13}$C.

3. Composition de résine de polypropylène selon la revendication 1 ou la revendication 2, dans laquelle la quantité de polymère hydrocarboné est de 0,1 à 2 parties en poids, de préférence de 0,3 à 1,2 partie en poids.

4. Composition de résine de polypropylène selon l'une quelconque des revendications précédentes, dans laquelle le polymère hydrocarboné comportant au moins un groupe hydroxyle à l'extrémité de sa chaîne principale a un poids moléculaire de 500 à 200 000 et a un nombre moyen de groupes hydroxyle de 1,5 à 8,0 par molécule du polymère hydrocarboné.

5. Composition de résine de polypropylène selon la revendication 4, dans laquelle le polymère ou copolymère de diène a été produit par polymérisation radicalaire ou polymérisation anionique.

6. Composition de résine de polypropylène selon l'une quelconque des revendications précédentes, dans laquelle le polymère ou copolymère de diène a été produit par polymérisation d'un diène conjugué monomère, de préférence le butadiène-1,3, l'isoprène, le chloroprène, le pentadiène-1,3, le 2,3-diméthyl-butadiene-1,3 ou le 1-phényl-butadiène-1,3.

7. Composition de résine de polypropylène selon l'une quelconque des revendications précédentes, dans laquelle le copolymère de diène est un copolymère d'un diène conjugué monomère et d'au moins une espèce de monomère vinylique en une quantité de préférence non supérieure à 50% en poids de la totalité des monomères, et dans laquelle le diène conjugué monomère est de préférence le butadiène-1,3, l'isoprène, le chloroprène, le pentadiène-1,3, le 2,3-diméthyl-butadiène-1,3 ou le 1-phényl-butadiène-1,3, et le monomère vinylique est de préférence un composé vinylique aromatique tel que le α-méthylstyrène ou le vinyltoluène; un dérivé d'acide (méth)acrylique tel que l'acrylate de méthyle, l'acrylate de butyle ou le méthacrylate de méthyle; un nitrile tel que l'acrylonitrile ou le méthacrylonitrile; une vinylpyridine telle que la 2-vinylpyridine ou la 4-vinylpyridine; un éther de vinyle tel que l'éther de méthyle et de vinyle ou l'éther de 2-chloréthyle et de vinyle; un composé vinylique halogéné tel que le chlorure de vinyle ou le bromure de vinylé un ester de vinyle tel que l'acétate de vinyle; ou un monomère vinylique comportant un atome d'hydrogène actif tel que le méthacrylate de 2-hydroxyéthyle, l'acide acrylique ou l'acrylamide.

8. Composition de résine de polypropylène selon l'une quelconque des revendications précédentes, dans laquelle le polymère hydrocarboné a été produit par les étapes consistant à soumettre un copolymère d'une α-oléfine, de préférence l'isobutylène, et d'un monomère autre que ladite α-oléfine, de préférence le butadiène ou le 1,3-pentadiène, à une oxydation et une décomposition et à réduire la substance ainsi obtenu.

9. Pellicule étirée biaxialement produite en moulant par fusion une composition de résine de polypropylène selon l'une quelconque des revendications précédentes pour former une pellicule et en étirant biaxialement à une température de 150° à 200°C la pellicule ainsi formée.

10. Pellicule étirée biaxialement selon la revendication 9, dans laquelle le taux d'étirage dans l'étirage biaxial est de 2 à 10 fois dans les directions longitudinale et transversale.